# EUROPÄISCHE PATENTANMELDUNG

(11) **EP 0 742 079 A1**
(43) Veröffentlichungstag der Anmeldung: **13.11.1996**
(21) Anmeldenummer: 95104969.1
(22) Anmeldetag: 03.04.1995
(51) Int. Cl.: B24C 9/00

(54) **Verfahren und Anlage zur Aufbereitung von Rückständen, die abrasive Schneidmaterialien enthalten**

(71) Anmelder: ecotop Gesellschaft für innovative Abfallwirtschaft mbH, D-85731 Ismaning (DE); PROKUTEC Produktions und Kunststofftechnik GmbH, 83022 Rosenheim (DE)
(72) Erfinder: Gropper, Georg, 89264 Weissenhorn (DE)
(74) Vertreter: Henkel, Feiler, Hänzel & Partner

(57) **Zusammenfassung**

Die Erfindung betrifft ein Verfahren und eine Anlage zur Aufbereitung von abrasive Schneidmaterialien enthaltenden Rückständen, insbesondere aus Druckstrahlabtragverfahren, insbesondere zur Aufbereitung von Schneidsanden aus Wasserstrahl-Schneidanlagen. Bei diesem Verfahren werden diese Rückstände getrocknet, die getrockneten Rückstände werden durch Aussieben in eine abzutrennende große und in eine weiterzuverarbeitende kleinere Korngrößenfraktion klassiert und die weiterzuverarbeitende Korngrößenfraktion wird durch pneumatisches Sortieren in abzutrennende Staub- und Feinanteile und in zum Einsatz als Schneidmaterial wiederverwertbares Material getrennt. Mit diesem Verfahren und dieser Anlage kann ein wesentlicher Teil der Schneidmaterialien rückgewonnen und als hochwertiges Schneidmaterial wieder in derartigen Anlagen verwendet werden.

## Beschreibung

Die Erfindung betrifft ein Verfahren und eine Anlage zur Aufbereitung von abrasive Schneidmaterialien enthaltenden Rückständen, insbesondere aus Druckstrahlabtragverfahren, insbesondere zur Aufbereitung von Schneidsanden aus Wasserstrahl-Schneidanlagen.

Zur Bewirkung der Schneidleistung bei Druckstrahlabtragverfahren werden allgemein aus feinkörnigen Stoffen aus natürlichem Rohmaterial bestehende Schneidmaterialien einer bestimmten Korngrößenqualität und Härte verwendet.
Auch beim Wasserstrahlschneiden, beispielsweise von Werkstoffen wie Edelstählen, Aluminium, Kunststoffen, Gestein etc. werden dem Wasserstrahl zur Erhöhung der Schneidleistung in Abhängigkeit von dem zu schneidenden Material und der gewünschten Schneidleistung häufig abrasive Schneidmaterialien zugesetzt. Diese Schneidmaterialien bestehen allgemein aus feinkörnigen Stoffen aus natürlichem Rohmaterial wie Granat, Olivin, Kupferschlacke usw. einer bestimmten Korngrößenqualität und werden im folgenden als Schneidsand bezeichnet.

Nach dem Schneiden fallen die Schneidmaterialien als feuchte Rückstände an, die bisher entsorgt werden mußten, da diese Rückstände zum einen abgetragene Anteile des geschnittenen Materials enthalten und zum anderen die Ansicht vorherrschte, daß eine Wiederverwendung des Schneidsands in Wasserstrahl-Schneidanlagen aufgrund der hohen Qualitätsanforderungen an das Material nicht mehr möglich ist, da der Schneidsand beim Schneiden gebrochen wird und unterschiedlichste Bestandteile und Größenfraktionen in den Rückständen vorliegen. Da der beim Wasserstrahlschneiden verwendete Schneidsand als hochreines Produkt vorliegen muß, da sonst die Gefahr des Verstopfens der Zugabedüse oder eines diskontinuierlichen Materialflusses besteht, wurde bisher allgemein ausschließlich Neusand verwendet.

Zunehmende Auflagen bei der Entsorgung der Rückstände aus Wasserstrahl-Schneidanlagen zwingen jedoch dazu, diese Rückstände insbesondere bei darin enthaltenen Schwermetallen als Hausmüll zu entsorgen, was zu sehr stark ansteigenden Betriebskosten führt. Es besteht daher der Wunsch, ein Verfahren und eine Anlage zu schaffen, mit dem die Rückstände aus derartigen abrasive Schneidmaterialien verwendenden Druckstrahlabtragverfahren, insbesondere von Schneidsanden aus Wasserstrahl-Schneidanlagen aufbereitet werden können, um die Verunreinigungen aus den Rückständen zu entfernen und zum Einsatz als Schneidmaterial in solchen Anlagen wiederverwendbares Material rückzugewinnen. Dadurch würden Umweltbelastungen und Kosten reduziert.

In diesem Zusammenhang ist aus der EP-0 502 461 A1 bereits ein Verfahren und eine zugehörige Anlage zur Rückgewinnung abrasiven Schneidmaterials beim Wasserstrahlschneiden bekannt geworden, bei dem bzw. der der Schneidsand aus einer Auffangwanne einer Wasserstrahl-Schneidanlage über ein Endlos-Förderband abtransportiert, anschließend während des Weitertransports auf einem Endlos-Förderband einer Trocknung durch UV-Strahler oder Heißluft unterzogen und sodann in einem schräg nach oben führenden Sortierkanal in einem Luftstrom suspendiert wird, wodurch die Teilchen je nach Größe bzw. Masse unterschiedlich weit im Luftstrom mitgerissen und dadurch in unterschiedliche Fraktionen aufgeteilt werden. Bei diesem bekannten Verfahren bestehen jedoch Zweifel, ob das rückgewonnene Material die für die Wiederverwendung als Schneidmaterial in Wasserstrahlanlagen erforderlichen hohen Qualitätsanforderungen erfüllen kann, da beispielsweise das Entfernen von Feinstaub vom Feinkorn einen kritischen Punkt darstellt, der die Qualität des Schneidsandes entscheidend beeinflußt, und der in der in diesem Verfahren verwendeten Windsichtung ohne aktive Trennung dieser Partikel nicht zufriedenstellend gelöst werden kann.

Es ist daher die Aufgabe der vorliegenden Erfindung, ein Verfahren und eine Anlage zur Aufbereitung von abrasive Schneidmaterialien enthaltenden Rückständen, insbesondere aus Druckstrahlabtragverfahren, insbesondere zur Aufbereitung von Schneidsanden aus Wasserstrahl-Schneidanlagen zu schaffen, mit dem ein wesentlicher Teil der Schneidmaterialien rückgewonnen und als hochwertiges Schneidmaterial wieder in derartigen Anlagen verwendet werden kann.

Gelöst wird diese Aufgabe erfindungsgemäß durch ein entsprechendes Verfahren, bei dem die Rückstände getrocknet werden, die getrockneten Rückstände durch Aussieben in eine abzutrennende große und in eine weiterzuverarbeitende kleinere Korngrößenfraktion klassiert werden und die weiterzuverarbeitende Korngrößenfraktion durch pneumatisches Sortieren in abzutrennende Staub- und Feinanteile und in zum Einsatz als Schneidmaterial wiederverwertbares Material getrennt wird.

Außerdem wird die Aufgabe erfindungsgemäß auch durch eine entsprechende Anlage mit einer Trocknungseinrichtung zum Trocken der Rückstände, mit einer Transporteinrichtung zum Transportieren der getrockneten Rückstände von der Trocknungseinrichtung zu einer Klassierungseinrichtung, die mindestens eine Siebstufe einer bestimmten Maschenweite zum Abtrennen von Material einer abzutrennenden großen und einer weiterzuverarbeitenden kleineren Korngrößenfraktion aufweist, und mit einer Transporteinrichtung zum Transportieren der weiterzuverarbeitenden Korngrößenfraktion von der Klassierungseinrichtung zu einer pneumatischen Sortiereinrichtung, wobei die pneumatische Sortiereinrichtung einen bewegbaren Lochboden zur Aufnahme des Materials, eine Vorrichtung zum Erzeugen einer Luftströmung durch den Lochboden hindurch und eine Transporteinrichtung zum Herausführen von zum Schneiden wiederverwendbarem Material aufweist, gelöst.

Mit diesem Verfahren und der Anlage können nach bisherigen Erkenntnissen bis zu 65% der aufbereiteten Rückstände rückgewonnen und wieder als abrasives Schneidmaterial in Wasserstrahl-Schneidanlagen eingesetzt werden. Praktische Schneidversuche haben sogar gezeigt, daß mit dem rückgewonnenen Material aufgrund der kleineren Größenverteilung der Teilchen eine bessere Schneidqualität erzielt werden kann als mit Neumaterial.
Durch die Wiederverwendung wesentlicher Teile der Rückstände werden nicht nur die Entsorgungskosten gesenkt, sondern auch Beschaffungskosten für Neumaterial eingespart.
Es hat sich auch gezeigt, daß in den Rückständen enthaltene Schwermetalle in den Staub- und Feinanteilen sowie in den abzutrennenden Grobverunreinigungen angereichert werden, so daß der Schwermetallgehalt in dem wiederverwendbaren Material zurückgeht und diese umwelttechnisch problematischen Stoffe gezielt entsorgt werden können. Das erfindungsgemäße Verfahren ist nach der Trocknung der Rückstände ein ausschließlich trocken arbeitendes Verfahren, wodurch bei Auswaschverfahren üblicherweise auftretende Abwasserprobleme vermieden werden.

Vorteilhafte und bevorzugte Weiterbildungen des Verfahrens und der Anlage gemäß der Erfindung sind in den Unteransprüchen angegeben.

So kann die beim Trocknen, beim Klassieren und/oder beim pneumatischen Sortieren anfallende Abluft abgezogen und in einer Filtereinrichtung von Staub- und Feinanteilen gereinigt werden, vorzugsweise mittels eines Gewebefilters zum Entfernen der Staub- und Feinanteile aus der Abluft und eines dem Gewebefilter nachgeordneten Gebläses. Durch diese Abluftabsaugung und -reinigung können unerwünschte Staub- und Feinanteile auf verhältnismäßig einfache Weise aus den Rückständen entfernt, genehmigungstechnisch erforderliche Abluftqualitäten erreicht und der Filterstaub gezielt und sachgerecht entsorgt werden.

Die beim Aussieben abzutrennende große Korngrößenfraktion umfaßt vorzugweise Grobverunreinigungen einer Korngröße von mehr als 0,3 bis 0,5 mm während die Teilchen einer geringeren Korngröße durch pneumatisches Sortieren weiterverarbeitet werden. Zur Erzielung von wiederverwendbarem Schneidmaterial besonders hoher Güte wird die weiterzuverarbeitende Fraktion beim Aussieben in mehreren Siebstufen in mindestens zwei Teil-Korngrößenfraktionen ausgesiebt, die wiederum nach Teil-Korngrößenfraktionen getrennt bei der pneumatischen Sortierung in jeweils getrennten pneumatischen Sortiereinrichtungen in abzutrennende Staub- und Feinanteile und in zum Einsatz als Schneidmaterial wiederverwendbares Material getrennt werden.

In einer bevorzugten Ausgestaltung ist die Anlage als mobile Anlage ausgeführt, die zum einfachen Transport auf Abrollcontainern montiert ist.

Im folgenden wird die Erfindung anhand einer bevorzugten Ausführungsform genauer beschrieben. In der beigefügten Zeichnung zeigen:

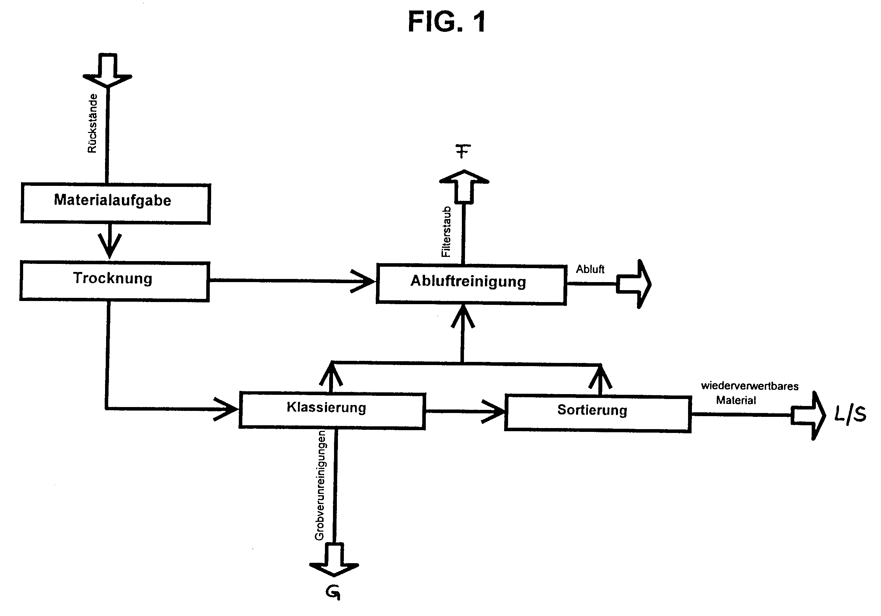

Fig. 1 ein Fließschaubild zur Erläuterung des erfindungsgemäßen Verfahrens,

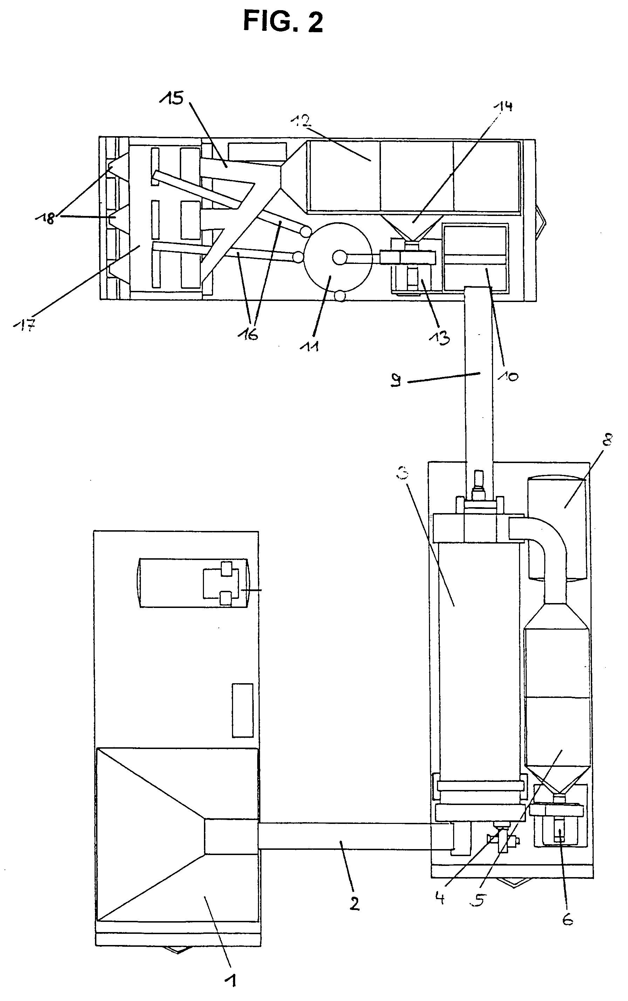

Fig. 2 eine Draufsicht auf eine erfindungssgemäße Anlage.

Die aufzubereitenden, feuchten Rückstände, die sich zu etwa 95% aus Schneidsand und zu 5% aus Abrasionsresten zusammensetzen, werden zunächst in einem der Anlage vorgelagerten Materialaufgabebehälter 1 gesammelt. Von dort werden die Rückstände über eine Transporteinrichtung 2, beispielsweise ein Förderband oder eine in einem Rohr angeordnete Förderschnecke und eine (nicht dargestellte) Dosiereinrichtung zur Trocknungseinrichtung transportiert und von oben in diese eingespeist.

In einem ersten Aufbereitungsschritt wird das Material in der an sich beliebigen Trocknungseinrichtung 3 getrocknet und dabei, je nach Aufbau und Funktionsweise der Trocknungseinrichtung durch diese hindurch bewegt. Die Trocknungseinrichtung ist bei der in den Figuren dargestellten und Ausführungsform beispielhaft als Trommeltrockner beschrieben.
Ein solcher Trommeltrockner umfaßt eine rotierbare Trommel, in der die Rückstände mit heißer Luft beaufschlagt werden, während das zunehmend getrocknete Material mittels Einbauten wie Schaufeln und aufgrund der Rotationsbewegung durch die Trommel bewegt wird. Zum Erzeugen des Heißluftstomes ist ein Brenner 4 am materialeinlaßseitigen Ende der Trommel 3 vorgesehen. Der Brenner wird von einem Brennstofftank 8 mit einem Brennstoff, beispielsweise Heizöl versorgt. Alternativ kann auch jede andere geeignete Brenner/Brennstoff-Kombination eingesetzt werden. Der Luftstrom und die Rührfunktion der Trommel bewirken gleichzeitig mit der Trocknung eine Vorabtrennung der im Trocknungsgut mitgeführten Staub-, Fein- und Leichtfraktionen, die im weiterzuverarbeitenden und als Schneidmaterial wiederzuverwendenden Material unerwünscht sind. Es ist in diesem Zusammenhang darauf hinzuweisen, daß jedes andere Trocknungsverfahren an Stelle des Trommeltrockners ebenso einsetzbar ist.

Nach Durchströmen der Trockentrommel 3 wird die Heißluft am anderen Ende der Trockentrommel durch eine Rohrleitung 7 als feuchte, staubbeladene Abluft abgezogen und einer Abluftreinigung zugeführt. Ebenso kann aber auch bei Verwendung einer anderen Trocknungseinrichtung bzw. - verfahrens eine Abluftabsaugung vorgesehen sein, die die Abluft aus der Trocknungseinrichtung der Abluftreinigung zuführt. Diese Abluftreinigung wird durch einen Filter 5, beispielsweise einen Gewebefilter gebildet, in dem die mitgeführten Teilchen abgeschieden werden. Die gereinigte Luft kann dann an die Umgebung abgegeben werden. Ein Gebläse 6 dient dem Abziehen der Abluft aus der Trocknungseinrichtung 3 und ist zum Schutz vor Verschleiß durch die in der Abluft enthaltenen Teilchen hinter dem Filter 5 angeordnet. Es arbeitet damit im Ansaugbetrieb und fördert nur gereinigte Luft durch das Gebläse 6. Der sich im Filter 5 ansammelnde Filterstaub (F) wird durch periodische Druckluftstöße abgelöst und sammelt sich am Boden des Filtergehäuses, von wo er über eine geeignete Fördereinrichtung ausgetragen und in einer Auffangeinrichtung, beispielsweise einem Behälter für die Entsorgung oder für anderweitige Aufbereitung gesammelt wird.

Nach Durchlaufen der Trocknungseinrichtung 3 fällt der getrocknete Sand auf eine Fördereinrichtung 9, beispielsweise ein Förderband, und wird zu einem weiteren Materialaufgabebehälter 10 transportiert, in dem er zwischengespeichert wird. Aus dem Materialaufgabebehälter 10 wird der Sand durch eine weitere (nicht dargestellte) Fördereinrichtung zu einer Klassiereinrichtung 11 transportiert.

Die Klassiereinrichtung 11 ist als eine Siebanlage mit mehreren Siebdecks aufgebaut, die nacheinander angeordnet sind und von oben nach unten von dem Material durchwandert werden. Die Maschenweite der Siebstufen sowie deren Neigung bestimmen das Siebergebnis. Außerdem können die Siebstufen gerüttelt werden. Diese Siebparameter sind so gewählt, daß der Sand in mehrere Fraktionen getrennt wird, wobei in der ersten Siebstufe im Sand mitgeführte Grobverunreinigungen (G) wie Restabschnitte des Schnittmaterials oder Schneidmaterialteilchen über einer bestimmten Größe abgetrennt werden. Als besonders bevorzugte Grenzteilchengröße, die als Grobverunreinigungen (G) hier abgetrennt und über eine Fördereinrichtung aus der Siebanlage 11 ausgetragen werden, haben sich Teilchen einer Größe von mehr als 0,3 bis 0,5 mm erwiesen. Die Grenzgröße hängt von der Zusammensetzung der aufzubereitenden Rückstände und den Anforderungen an den Größenbereich und die Qualität des wiederzuverwendenden Materials ab.

Die weiteren Siebstufen bewirken ggf. eine Trennung des Sandes in mehrere Kornklassen, die für die Wiederverwendung als Schneidmaterial geeignet sind. Bei der Schneidsandaufbereitung für Wasserstrahl-Schneidanlagen sind das vorzugsweise Korngrößenfraktionen aus Teilchen einer Größe unter 0,3 bis 0,5 mm. Abhängig von der Zusammensetzung der aufzubereitenden Rückstände können durch geeignete Wahl und Anzahl der Siebstufen andere Korngrößenfraktionen für die Weiterverarbeitung in der Anlage oder zum Herausführen aus der Siebanlage für eine anderweitige Entsorgung ausgesiebt werden. In der Siebanlage 11 anfallende Abluft kann durch eine entsprechende Abluftreinigungsvorrichtung mit Gebläse 13 und Gewebefilter 12, wie sie etwa in Zusammenhang mit der Trocknungseinrichtung beschrieben wurde, abgesaugt und zur Reinigung von Staub- und Feinanteilen (F) einer Abluftreinigung unterzogen werden.

Die Korngrößenfraktionen werden über getrennte Fördereinrichtungen 16 der nächsten Aufbereitungsstufe zugeführt, die als eine pneumatische Sortierung ausgestaltet ist. Hier können ebenfalls (nicht dargestellte) Materialaufgabebehälter an der Oberseite der Sortiereinrichtungen 17 an deren Einlauf vorgesehen sein, um das Material zu sammeln und zwischenzuspeichern.

Bei der pneumatischen Sortierung werden die noch im Sand enthaltenen Staub- und Feinanteile (F) durch eine Kombination von stoßweiser mechanischer Materialbewegung und einer Luftströmung abgetrennt. Die mechanische Materialbewegung bewirkt ein Ablösen der Staubanteile von den Sandkörnern und die Luftströmung reißt die leichten Staub- und Feinanteile (F) mit. Dazu werden die über die Fördereinrichtungen 16 von der Siebanlage 11 herangeführten Korngrößenfraktionen direkt oder aus dem zwischengeordneten Materialaufgabebehälter von oben auf einen geneigten Lochboden aufgegeben, der von der Unterseite her von einem gezielt verteilten Luftstrom durchströmt wird. Zur Erzeugung des Luftstromes durch den Lochboden ist ein geeignetes Gebläse und zum Erzeugen der Rüttelbewegung des Lochbodens eine geeignete Antriebsvorrichtung vorgesehen. Das Gebläse ist vorzugsweise hinsichtlich der Strömungsgeschwindigkeit und/oder der Verteilung der Strömungsgeschwindigkeit der Luftströmung über der Fläche des Lochbodens einstellbar, so daß der Luftstrom in Abhängigkeit von den zu sortierenden Teilchen gezielt verteilt und gewählt werden kann.

Die Luft wird als Abluft nach dem Durchströmen des Materials auf dem Lochboden über eine Abzugshaube gesammelt und über Rohrleitungen 15 zu einer Abluftreinigung mit Filter 12 und Gebläse 13 abgeführt. Diese kann jeden zur Entfernung von Staub-, Fein- und Leichtanteilen aus der Luft geeigneten Aufbau aufweisen, wobei hinsichtlich des Aufbaus der Abluftreinigungsvorrichtung der Abluft aus der pneumatischen Sortierung bei dem bevorzugten Ausführungsbeispiel auf die in Zusammenhang mit der Trocknungseinrichtung beschriebene Abluftreinigungsvorrichtung verwiesen wird.

Das auf dem geneigten Lochboden verbleibende Material wird durch die Rüttelbewegung in Leichtgut- (L) und Schwergutfraktion (S) getrennt und zum oberen bzw. unteren Rand des Lochbodens transportiert. Wird das Material von der Siebanlage in mehreren getrennten Teil-Korngrößenfraktionen zugeführt, kann für jede Korngrößenfraktion eine getrennte pneumatische Sortiereinrichtung 17 gleichartigen Aufbaus vorgesehen werden. Dadurch können die das Sortierergebnis beeinflußenden Betriebsparameter wie Neigungswinkel des Lochbodens, Strömungsgeschwindigkeit und Luftverteilung der den Lochboden durchströmenden Luft, Rüttelfrequenz und - amplitude des Lochbodens auf die jeweilige Teil-Fraktion getrennt eingestellt werden, um optimale Sortierergebnisse zu erzielen. Leicht- und Schwergut fallen von dem Lochboden auf Fördereinrichtungen 18, die das Material zu Austragbehältern transportieren.

Das nach der pneumatischen Sortierung auf dem Lochboden verbliebene und in die Austragbehälter ausgetragene Material kann nun entweder in Leichtgut- und Schwergutfraktionen getrennt oder als Mischung wieder als hochwertiges Schneidmaterial in Wasserstrahl-Schneidanlagen wiederverwendet werden.

In weiteren Ausgestaltungen des erfindungsgemäßen Verfahrens kann das aufzubereitende Material in Abhängigkeit von dessen Zusammensetzung und den gewünschten Qualitäten in mehreren Teil-Korngrößenfraktionen ausgesiebt und der pneumatischen Sortierung unterzogen werden. Auch können gegebenenfalls zu entsorgende, nicht weiterzuverarbeitende oder weiterzuverwendende Korngrößenfraktionen bei jedem Bearbeitungsschritt abgetrennt und abgesondert werden.

Die Abluftreinigung kann bei allen oder nur einigen Aufbereitungsschritten (Trocknung, Klassierung, pneumatische Sortierung) genehmigungsrechtlich oder umwelttechnisch erforderlich sein. Zur Abluftreinigung können bekannte Verfahren und Anlagen eingesetzt werden. Diese können nach Aufbereitungsschritten getrennt oder als Anlage zur zentralen Aufbereitung der Abluft aus mehreren Aufbereitungsschritten zusammengefaßt werden.

Die Fördereinrichtungen zwischen den Anlagenteilen und Aufbereitungsschritten und zum Abtransport bestimmter Fraktionen aus dem jeweiligen Anlagenteil können beispielsweise als Förderbänder, als Förderschnecken, als Rutschen, oder, bei trockenem Material, als pneumatische Transporteinrichtungen ausgestaltet sein.

Ist die Anlage für kleinere Kapazitäten ausgelegt und somit als mobile Anlage ausführbar, können die einzelnen Komponenten beispielsweise auf Paletten oder Abrollcontainern montiert werden, um so einen einfachen Transport zu unterschiedlichen Standorten zu ermöglichen.

## Patentansprüche

1. Verfahren zur Aufbereitung von abrasive Schneidmaterialien enthaltenden Rückständen, insbesondere aus Druckstrahlabtragverfahren, insbesondere zur Aufbereitung von Schneidsanden aus Wasserstrahl-Schneidanlagen, bei dem
die Rückstände getrocknet werden,
die getrockneten Rückstände durch Aussieben in eine abzutrennende große und in eine weiterzuverarbeitende kleinere Korngrößenfraktion klassiert werden und
die weiterzuverarbeitende Korngrößenfraktion durch pneumatisches Sortieren in abzutrennende Staub- und Feinanteile und in zum Einsatz als Schneidmaterial wiederverwertbares Material getrennt wird.

2. Verfahren gemäß Anspruch 1, wobei beim Trocknen die Rückstände getrocknet werden, während sie durch eine Trocknungseinrichtung (3) bewegt werden.

3. Verfahren gemäß Anspruch 2, wobei beim Trocknen anfallende Abluft abgezogen und in einer Filtereinrichtung (5,6) von Staub- und Feinanteilen (F) gereinigt wird.

4. Verfahren gemäß Anspruch 1, 2 oder 3, wobei beim Klassieren die getrockneten Rückstände in mindestens einer Siebstufe einer bestimmten Maschenweite zum Abtrennen des Materials der abzutrennenden großen (G) und der weiterzuverarbeitenden kleineren Korngrößenfraktion ausgesiebt und die Siebstufe beim Aussieben bewegt wird.

5. Verfahren gemäß einem der vorstehenden Ansprüche, wobei die abzutrennende große Korngrößenfraktion Grobverunreinigungen (G), insbesondere Teilchen einer Korngröße von mehr als 0,3 - 0,5 mm umfaßt, und die weiterzuverarbeitende kleinere Korngrößenfraktion insbesondere Teilchen einer Korngröße unterhalb dieses Bereichs aufweist.

6. Verfahren gemäß einem der vorstehenden Ansprüche, wobei die beim Klassieren ausgesiebte weiterzuverarbeitende kleinere Korngrößenfraktion in mindestens zwei Teil-Korngrößenfraktionen ausgesiebt wird.

7. Verfahren gemäß einem der vorstehenden Ansprüche, wobei beim pneumatischen Sortieren die weiterzuverarbeitende Korngrößenfraktion auf einen schrägstehenden Lochboden aufgegeben wird, das Material auf dem Lochboden zum Lösen der Staubanteile bewegt wird, das Material zum Abtrennen der Staubanteile (F) durch den Lochboden hindurch mit einer Luftströmung beaufschlagt wird und das auf dem Lochblech verbleibende Material als zum Schneiden wiederverwendbares Material (L,S) gesammelt wird.

8. Verfahren gemäß Anspruch 7 und 6, wobei das pneumatische Sortieren der weiterzuverarbeitenden Korngrößenfraktion nach Teil-Korngrößenfraktionen getrennt erfolgt.

9. Verfahren gemäß einem der vorstehenden Ansprüche, wobei die beim pneumatischen Sortieren anfallende Abluft abgezogen und in einer Filtereinrichtung (12,13) von Staub- und Feinanteilen (F) gereinigt wird.

10. Verfahren gemäß einem der vorstehenden Ansprüche, wobei die beim Aussieben anfallende Abluft abgezogen und in einer Filtereinrichtung (12,13) von Staub- und Feinanteilen (F) gereinigt wird.

11. Anlage zur Aufbereitung von abrasive Schneidmaterialien enthaltenden Rückständen, insbesondere aus Druckstrahlabtragverfahren, insbesondere zur Aufbereitung von Schneidsanden aus Wasserstrahl-Schneidanlagen,
mit einer Trocknungseinrichtung (3) zum Trocken der Rückstände,
mit einer Transporteinrichtung (9) zum Transportieren der getrockneten Rückstände von der Trocknungseinrichtung (3) zu einer Klassierungseinrichtung (11), die mindestens eine Siebstufe einer bestimmten Maschenweite zum Abtrennen von Material einer abzutrennenden großen (G) und einer weiterzuverarbeitenden kleineren Korngrößenfraktion aufweist, und
mit einer Transporteinrichtung (16) zum Transportieren der weiterzuverarbeitenden Korngrößenfraktion von der Klassierungseinrichtung (11) zu einer pneumatischen Sortiereinrichtung (17), wobei die pneumatische Sortiereinrichtung einen bewegbaren Lochboden zur Aufnahme des Materials, eine Vorrichtung zum Erzeugen einer Luftströmung durch den Lochboden hindurch und eine Transporteinrichtung (18) zum Herausführen von zum Schneiden wiederverwendbarem Material (L,S) aufweist.

12. Anlage gemäß Anspruch 11, bei der die Vorrichtung zum Erzeugen einer Luftströmung durch den Lochboden hindurch hinsichtlich der Strömungsgeschwindigkeit und/oder der Verteilung der Strömungsgeschwindigkeit der Luftströmung einstellbar ist.

13. Anlage gemäß Anspruch 11 oder 12, bei der die mindestens eine Siebstufe der Klassiereinrichtung (11) mittels einer Vorrichtung in Bewegung versetzbar ist.

14. Anlage gemäß Anspruch 11, 12 oder 13, bei der die mindestens eine Siebstufe zum Abtrennen von Grobverunreinigungen (G) einer Korngröße von mehr als 0,3 - 0,5 mm vorgesehen ist.

15. Anlage gemäß Anspruch 11, 12, 13 oder 14, bei der weitere Siebstufen zum Aussieben des weiterzuverarbeitenden Materials in mehrere Teil-Korngrößenfraktionen vorgesehen sind.

16. Anlage gemäß Anspruch 15, bei der für die Teil-Korngrößenfraktionen jeweils getrennte pneumatische Sortiereinrichtungen (17) vorgesehen sind.

17. Anlage gemäß einem der Ansprüche 11 bis 16, bei der die pneumatische Sortiereinrichtung (17) und/oder die Trocknungseinrichtung (3) und/oder die Klassiereinrichtung (11) mit einer Einrichtung (6,13) zum Abziehen der Abluft und mit einer Vorrichtung (5,12) zum Reinigen der Abluft verbunden ist bzw. sind.

18. Anlage gemäß Anspruch 17, wobei die Vorrichtung zum Reinigen der Abluft einen Gewebefilter (5,12) zum Entfernen von Staub- und Feinanteilen (F) aus der Abluft und die Einrichtung zum Abziehen der Luft ein dem Gewebefilter nachgeordnete$ Gebläse (6,13) aufweist.

19. Anlage gemäß Anspruch 18, bei der der Gewebefilter (5,12) zum Ablösen der Staub- und Feinanteile (F) in Bewegung versetzbar ist und eine Transporteinrichtung zum Transportieren der abgelösten Staub- und Feinanteile aus der Vorrichtung zum Reinigen der Abluft vorgesehen ist.

20. Anlage gemäß einem der Ansprüche 11 bis 19, bei der der Trocknungseinrichtung (3) eine Materialaufgabeeinrichtung (1) vorgeschaltet ist und die Rückstände über eine Transporteinrichtung (2) und eine Dosiereinrichtung von der Materialaufgabeeinrichtung (1) zur Trocknungseinrichtung (3) transportierbar sind.

21. Anlage gemäß einem der Ansprüche 11 bis 20, bei der als Transporteinrichtungen (2,9,16) Förderbänder und/oder pneumatische Transporteinrichtungen vorgesehen sind.

22. Anlage gemäß einem der Ansprüche 11 bis 21, wobei die Anlage als mobile Anlage auf einem oder mehreren Abrollcontainern montiert ist.
